# DEMANDE DE BREVET EUROPEEN

(11) **EP 1 032 064 A1**
(43) Date de publication de la demande: **30.08.2000**
(21) Numéro de dépôt: 00400386.9
(22) Date de dépôt: 10.02.2000
(51) Int. Cl.: H01M 4/66, H01M 4/62, H01M 10/40, H01M 4/04

(54) **Electrode positive de générateur électrochimique rechargeable au lithium à collecteur de courant en aluminium**

(30) Priorité: 25.02.1999 FR 9902359
(71) Demandeur: ALCATEL, 75008 Paris (FR)
(72) Inventeur: Marugan, Marielle, 92290 Chatenay-Malabry (FR); Galaj, Stanislas, 94110 Arcueil (FR); Siret, Clémence, 33520 Bruges (FR); Peres, Jean-Paul, 33700 Merignac (FR); Biensan, Philippe, 33360 Carignan (FR)
(74) Mandataire: Laroche, Danièle

(57) **Abrégé**

La présente invention a pour objet une électrode positive de générateur électrochimique rechargeable au lithium comportant un collecteur de courant en aluminium, et une pâte contenant une matière électrochimiquement active et un liant apte à être mis en solution ou suspension dans l'eau, caractérisée en ce que la surface dudit collecteur est recouverte d'une couche protectrice constituée d'au moins un composant choisi parmi un oxalate et un composé d'au moins un élément choisi parmi le silicium, le chrome, et le phosphore.

## Description

La présente invention concerne une électrode positive de générateur électrochimique rechargeable au lithium comportant un collecteur de courant en aluminium. Elle s'étend en outre au procédé de fabrication de cette électrode et à tout système électrochimique comportant au moins une telle électrode.

Les générateurs électrochimiques rechargeables au lithium possèdent une électrode positive de type empâté comportant un support conducteur, qui sert de collecteur de courant, sur lequel est déposée une pâte contenant un liant et une matière électrochimiquement active capable d'insérer du lithium dans sa structure. La matière active cathodique est généralement un composé de métal de transition comme un oxyde, en particulier un oxyde lithié, un sulfure ou un sulfate.

Le collecteur de courant de l'électrode positive peut être par exemple un feuillard, un feuillard perforé, une grille, du métal déployé, un feutre ou encore une mousse. On peut utiliser notamment de l'acier inoxydable, du titane, de l'aluminium, du nickel, etc...

La pâte est réalisée en ajoutant à la poudre de matière active le liant préalablement mis en solution ou en suspension dans un solvant. Après enduction de la pâte, le solvant est éliminé en séchant l'électrode. La plupart des liants cathodiques couramment utilisé aujourd'hui sont mis en oeuvre dans un solvant organique. C'est notamment le cas du polyfluorure de vinylidène (PVDF) qui est dissous dans la N-méthylpyrrolidone (NMP). Mais les procédés mettant en oeuvre des solvants organiques présentent des inconvénients à l'échelle industrielle en raison de la toxicité des solvants employés et des problèmes de coût et de sécurité liés au recyclage d'un grand volume de solvant. L'attention s'est donc tournée vers des liants compatibles avec l'utilisation de solvants aqueux.

Le brevet US-5,378,560 décrit une électrode positive de générateur au lithium qui a pour support un feuillard d'aluminium qui est recouvert d'une pâte aqueuse comprenant la matière active qui est un oxyde lithié de cobalt LiCoO₂, un matériau conducteur (graphite) et un liant qui est un mélange de polyacrylate de sodium et d'un polymère choisi parmi les copolymères de styrène et de butadiène ayant un groupement carboxyle.

Mais le demandeur a remarqué que le collecteur en aluminium mis en contact avec une pâte contenant de l'eau se corrode. La couche superficielle d'alumine est attaquée et on observe un dégagement gazeux.

L'électrode positive décrite dans le brevet US-5,580,683 possède un collecteur de courant métallique qui peut contenir de l'aluminium, comme notamment un alliage d'aluminium. Ce document mentionne par ailleurs l'utilisation d'eau comme solvant dans la réalisation de la pâte. La pâte est séchée avant d'être pressée sur le collecteur. Ce procédé évite le contact de l'aluminium avec le milieu aqueux de la pâte, mais ne résoud pas le problème de la corrosion du collecteur lorsqu'on lui applique une pâte contenant de l'eau.

Afin d'abaisser l'impédance interfaciale, on recouvre la surface d'un collecteur de courant en aluminium par une couche primaire de protection. Le brevet US-5,591,544 propose de traiter le collecteur pour éliminer la couche native d'alumine, puis de recouvrir la surface d'une couche primaire comprenant du carbone et éventuellement un oxyde de métal de transition apte à insérer du lithium.

Le document W097/14188 décrit une couche primaire composée de carbone et de polysilicate d'un métal alcalin, et disposée entre le collecteur de courant et la couche contenant la matière active.

Une telle couche de carbone est connue pour être poreuse ; elle ne constitue pas une barrière fiable vis-à-vis de la corrosion.

En outre des essais effectués par le demandeur sur des collecteurs commerciaux revêtus d'une couche de carbone protectrice analogue ont montré une dissolution de la couche de carbone en présence de la pâte aqueuse.

La présente invention a pour but de proposer une électrode positive de générateur électrochimique rechargeable au lithium dont le collecteur de courant en aluminium n'est pas corrodé lors de l'application d'une pâte contenant de l'eau.

L'objet de la présente invention est une électrode positive de générateur électrochimique rechargeable au lithium comportant un collecteur de courant en aluminium, et une pâte contenant une matière électrochimiquement active et un liant apte à être mis en solution ou suspension dans l'eau, caractérisée en ce que la surface dudit collecteur est recouverte d'une couche protectrice constituée d'au moins un composant choisi parmi un oxalate et un composé d'au moins un élément choisi parmi le silicium, le chrome, et le phosphore.

La plupart des polymères peuvent être utilisés comme liant à condition d'être solubles dans l'eau ou bien de former une émulsion stable (latex) lorsqu'ils sont mis en suspension dans l'eau.

De tels polymères sont par exemple les polymères de l'acide acrylique (PAAc), de l'acide méthacrylique, de l'acide sulfonique, de l'acide itaconique, de leurs sels (par exemple avec les cations Li⁺, Na⁺, K⁺,...), les polyacrylamides (PAA), les polyamides (PA), le polyvinylalcool (PVA), les précurseurs de polyuréthanes (PU), le polytétrafluoroéthylène (PTFE), ainsi que leurs copolymères et leurs mélanges. Mais aussi les résines phénoliques, les composés cellulosiques et les élastomères.

Selon une première forme d'exécution de l'invention, le liant comprend au moins un élastomère. Parmi les élastomères, on pourra choisir un copolymère d'acrylonitrile et de butadiène (NBR), un copolymère d'acrylonitrile et de butadiène hydrogéné (HNBR), un copolymère de styrène et de butadiène (SBR), un copolymère de styrène et d'acrylonitrile (SAN), un terpolymère d'acrylonitrile, de butadiène et de styrène (ABS), un terpolymère de styrène, d'acrylonitrile et de styrène (SAS), un terpolymère de styrène, d'isoprène et de styrène (SIS), un terpolymère de styrène, de butadiène et de styrène (SBS), un terpolymère d'éthylène, de propylène et de diène (EPDM), un polymère styrène / éthylène / butène / styrène (SEBS), un caoutchouc thermoplastique de polyuréthane (PUR), un polychloroprène (CR) ou 2 chloro 1-3 butadiène (connu par exemple sous la marque commerciale "NEOPRENE"), un polyisobutylène (PIB), un polyisoprène, un polybutadiène, un copolymère éthylène / propylène (EPR), un copolymère d'éthylène et d'acétate de vinyle (EVA), un copolymère d'éthylène et d'ester acrylique (EMA, EEA,...), et leurs mélanges.

De préférence ledit élastomère est choisi parmi un copolymère styrène / butadiène (SBR) et un copolymère acrylonitrile / butadiène (NBR).

Selon une deuxième forme d'exécution de l'invention, le liant comprend au moins un composé cellulosique. On peut choisir comme liant un composé cellulosique tel que une méthylcellulose (MC), une carboxyméthylcellulose (CMC), une hydroxyéthylcellulose (HEC) ou une hydroxypropylméthylcellulose (HPMC).

De préférence ledit composé cellulosique est une carboxyméthylcellulose (CMC) salifiée de poids moléculaire moyen au moins égal à 200 000.

Selon une troisième forme d'exécution de l'invention, ledit liant comprend au moins un élastomère et au moins un composé cellulosique.

Selon une première variante, ledit élastomère est le copolymère styrène / butadiène (SBR) et le composé cellulosique est la carboxyméthylcellulose (CMC) salifiée de poids moléculaire moyen au moins égal à 200 000.

Selon une deuxième variante, ledit élastomère est le copolymère acrylonitrile / butadiène (NBR), et le composé cellulosique est la carboxyméthylcellulose (CMC) salifiée de poids moléculaire moyen au moins égal à 200 000.

Ledit liant contient de 30% à 70% en poids dudit élastomère et de 30% à 70% dudit composé cellulosique par rapport à la somme des poids dudit élastomère et dudit composé cellulosique.

De préférence ledit liant contient de 50% à 70% en poids dudit élastomère et de 30% à 50% dudit composé cellulosique par rapport à la somme des poids dudit élastomère et dudit composé cellulosique.

De préférence encore ledit liant contient de 60% à 70% en poids dudit élastomère et de 30% à 40% en poids dudit composé cellulosique par rapport à la somme des poids dudit élastomère et dudit composé cellulosique.

Outre le liant, la pâte contient aussi une matière électrochimiquement active. Ladite matière active est choisie parmi un oxyde de métaux de transition, un sulfure comme par exemple Li₃MoS₃, LiTiS₂, Li₃NiPS₃, ou Li₄V₂S₅, un sulfate, par exemple Fe(SO₄)₂ ou Ni(SO₄)₂, et leurs mélanges.

De préférence ledit oxyde de métaux de transition est choisi parmi l'oxyde de vanadium (V₂O₅), les oxydes lithiés à base de manganèse (LiMnO₂, LiMn₂O₄), de fer (LiFeO₂), de nickel (LiNiO₂) et de cobalt (LiCoO₂), éventuellement dopés par au moins un élément choisi notamment parmi le magnésium, le calcium, le strontium, le baryum, le titane, le zirconium, le vanadium, le chrome, le manganèse, le fer, le cobalt, le nickel, le zinc, le bore, l'aluminium, et leurs mélanges.

L'invention a aussi pour objet un générateur électrochimique rechargeable au lithium comprenant un électrolyte, au moins une électrode négative et au moins une électrode positive selon la présente invention.

De préférence l'électrode négative a pour matière active un matériau carboné apte à insérer du lithium dans sa structure. La matière active anodique peut être choisie parmi les carbones, en particulier les carbones cristallisés comme les graphites en poudre ou en fibres, les carbones peu cristallisés graphitables comme les cokes, ou non graphitables comme les carbones vitreux ou les noirs de carbone, et les mélanges de ces carbones.

Mais la matière active négative peut également être choisie parmi les composés contenant un métal susceptible de former un alliage avec le lithium, comme les oxydes, sulfures, nitrures et carbures métalliques.

L'électrolyte peut être un liquide ou un polymère.

Selon une variante, l'électrolyte est liquide et comprend au moins un sel de lithium dissout dans au moins un solvant organique.

Selon une autre variante, l'électrolyte comprend au moins une matrice polymère et un sel de lithium.

Le sel de lithium est choisi parmi le perchlorate de lithium LiClO₄, l'hexafluoroarsénate de lithium LiAsF₆, l'hexafluorophosphate de lithium LiPF₆, le tétrafluoroborate de lithium LiBF₄, le trifluorométhanesulfonate de lithium LiCF₃SO₃, le trifluorométhanesulfonimide de lithium LiN(CF₃SO₂)₂ (LiTFSI), ou le trifluorométhanesulfoneméthide de lithium LiC(CF₃SO₂)₃ (LiTFSM).

Le solvant organique comprend un éther, un ester ou un mélange d'éthers et/ou d'esters, l'ester étant choisi parmi les carbonates linéaires, et les carbonates cycliques de plus de 4 atomes de carbone. De préférence ledit solvant organique comprend au moins un ester choisi parmi un carbonate comme le carbonate de propylène, le carbonate d'éthylène, le carbonate de butylène, le carbonate de diéthyle et le carbonate de diméthyle, un acétate comme l'acétate d'éthyle, un propionate ou un butyrate comme le butyrate de méthyle.

Un autre objet de la présente invention est un procédé de fabrication d'une électrode positive de générateur électrochimique rechargeable au lithium comportant un collecteur de courant en aluminium, et une pâte contenant une matière électrochimiquement active et un liant.

Selon un premier mode de réalisation de l'invention, ledit procédé comprend les étapes suivantes :
- on réalise une pâte en ajoutant une matière électrochimiquement active en poudre à un liant en solution ou en suspension dans l'eau,
- pour former une électrode, on étale ladite pâte sur un collecteur de courant en aluminium recouvert d'une couche protectrice constituée d'au moins un composant choisi parmi un oxalate et un composé d'au moins un élément choisi parmi le silicium, le chrome, et le phosphore,
- on sèche ladite électrode à une température comprise entre 40°C et 120°C pour évaporer l'eau,
- on comprime ladite électrode à température ambiante jusqu'à l'obtention d'une porosité de préférence comprise entre 30% et 40% du volume total de l'électrode.

Selon une deuxième variante de l'invention, le procédé comprend les étapes suivantes:
- on réalise une pâte en ajoutant à un liant en solution ou en suspension dans l'eau, une matière électrochimiquement active en poudre et au moins un composant choisi parmi un oxalate, un silicate, un chromate, un phosphate, et un phosphochromate,
- on étale ladite pâte sur un collecteur de courant en aluminium pour former une électrode,
- on sèche ladite électrode à une température comprise entre 40°C et 120°C pour évaporer l'eau,
- on comprime ladite électrode à température ambiante jusqu'à l'obtention d'une porosité de préférence comprise entre 30% et 40% du volume total de l'électrode.

De préférence ledit composant est choisi parmi le monosilicate de sodium SiO₂NaOH, le métasilicate de sodium Na₂SiO₃, le chromate de potassium K₂CrO₄, et le bichromate de potassium K₂Cr₂O₇. De préférence encore ledit composant est le métasilicate de sodium Na₂SiO₃.

Selon une première forme d'exécution de l'invention, le liant comprend au moins un élastomère. De préférence ledit élastomère est choisi parmi un copolymère styrène / butadiène (SBR) et un copolymère acrylonitrile / butadiène (NBR).

Selon une deuxième forme d'exécution de l'invention, le liant comprend au moins un composé cellulosique. De préférence ledit composé cellulosique est la carboxyméthylcellulose (CMC) salifiée de poids moléculaire moyen au moins égal à 200 000.

Selon une troisième forme d'exécution de l'invention, ledit liant comprend au moins un élastomère et au moins un composé cellulosique. De préférence ledit composé cellulosique est la carboxyméthylcellulose (CMC) salifiée de poids moléculaire moyen au moins égal à 200 000 et ledit élastomère est choisi parmi un copolymère styrène / butadiène (SBR) et un copolymère acrylonitrile / butadiène (NBR).

Ledit liant contient de 30% à 70% en poids dudit élastomère et de 30% à 70% dudit composé cellulosique par rapport à la somme des poids dudit élastomère et dudit composé cellulosique. De préférence respectivement 50 à 70% dudit élastomère et 30 à 50% dudit composé cellulosique, et de préférence encore 60 à 70% dudit élastomère et 30 à 40% dudit composé cellulosique.

Ladite matière active est choisie parmi un oxyde de métaux de transition, un sulfure, un sulfate et leurs mélanges. De préférence ladite matière active est un oxyde de vanadium, un oxyde lithié ou un oxyde lithié dopé d'un métal de transition.

En outre ladite pâte peut contenir des additifs comme un matériau conducteur ou un agent de texture. C'est notamment le cas de l'électrode positive lorsque la matière active est un oxyde lithié d'un métal de transition. Ces oxydes étant naturellement semi-conducteurs, on doit ajouter un matériau conducteur, par exemple du graphite, du carbone ou de la suie, pour accroître la conductivité macroscopique de l'électrode.

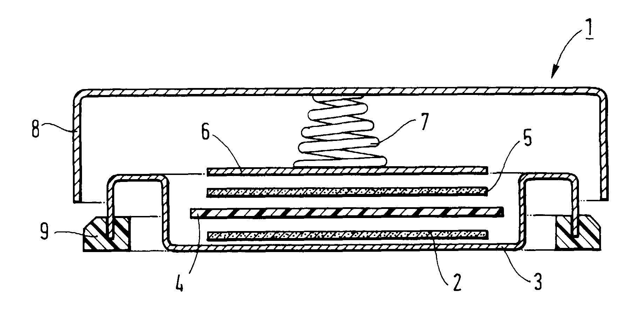

D'autres caractéristiques et avantages de la présente invention apparaîtront au cours des exemples suivants de réalisation, donnés bien entendu à titre illustratif et non limitatif, et dans le dessin annexé sur lequel la figure unique représente un générateur de format bouton comprenant l'électrode selon la présente invention.

L'évaluation de la corrosion d'un collecteur de courant en aluminium en présence d'eau est effectuée de la manière suivante.

Le collecteur est en aluminium de référence "1085", il peut être recouvert d'une couche protectrice obtenue par traitement notamment par une solution contenant un chromate ou un mélange de phosphate et de chromate. Le collecteur est mis en contact avec une solution contenant une matière électrochimiquement active en suspension dans l'eau. Selon le cas la solution peut aussi contenir un composé comme le bichromate de potassium K₂Cr₂O₇ ou le métasilicate de sodium Na₂SiO₃. Après 30 minutes le collecteur est rincé à l'eau désionisée et on l'examine afin de détecter une éventuelle corrosion.

Lorsqu'il se produit une corrosion on observe des bulles lors de la mise en contact du collecteur avec la solution. Après rinçage la surface du collecteur apparaît détériorée.

Les résultats obtenus sont rassemblés dans le tableau 1 ci-dessous.

D'une manière générale, on remarque d'une part que le collecteur en aluminium est corrodé dans tous les cas par la solution lorsqu'elle ne contient pas de composé additionnel, et d'autre part que le collecteur préalablement protégé par un traitement par un chromate ou un phosphochromate n'est jamais corrodé.

L'addition dans la solution de bichromate de potassium K₂Cr₂O₇ à une concentration de 1g/l d'eau ou de métasilicate de sodium Na₂SiO₃ à une concentration de 10g/l d'eau supprime dans tous les cas la corrosion.

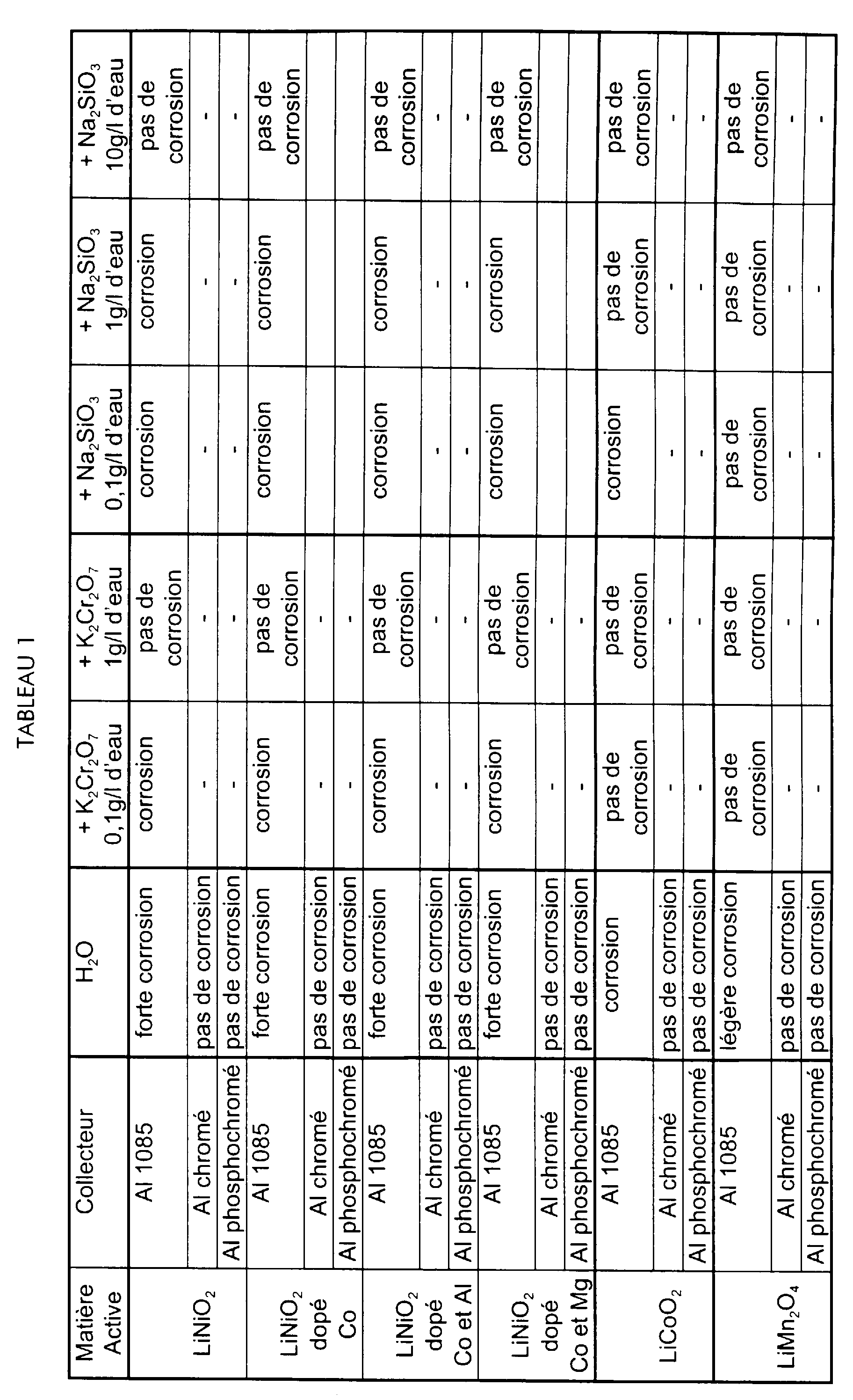

La fabrication d'une électrode s'effectue de la manière suivante.

On prépare une pâte comprenant une matière active, un matériau conducteur à base de carbone, et un liant en solution ou en suspension dans un solvant approprié.

L'électrode est mise en forme par enduction de la pâte sur un feuillard d'aluminium. Le solvant est ensuite évaporé par séchage à 120°C, puis on comprime l'électrode.

Dans la cas où il se produit une corrosion, on observe lors de l'étalement de la pâte sur le feuillard d'aluminium une réaction entre la pâte et le collecteur qui se manifeste principalement par un dégagement gazeux. Après séchage, l'électrode est craquelée et perforée.

L'électrode est ensuite évaluée électrochimiquement en générateur électrochimique 1 de format bouton comme représenté sur la figure unique.

L'électrode positive 2 est déposée dans la coupelle 3 du générateur 1. Le séparateur 4 est constitué de deux feuilles de polypropylène microporeux, de référence commerciale "CELGARD 2502", encadrant un feutre de polypropylène de la marque "VILEDON" servant de réservoir d'électrolyte. L'électrode négative 5 est une pastille de lithium métallique de 15mm de diamètre. Une cale en inox 6 assure la reprise du courant et un ressort 7 maintient le contact entre les différents éléments du générateur 1.

On imprègne le faisceau électrochimique d'un électrolyte constitué d'une solution de concentration 1M d'hexafluorophosphate de lithium LiPF₆ dans un mélange de solvants organiques. Après introduction de l'électrolyte, le générateur 1 est fermé de manière étanche avec un couvercle 8 par l'intermédiaire d'un joint 9.

Lorsque la matière électrochimiquement active cathodique est un oxyde lithié mixte de nickel, de cobalt et d'aluminium, le solvant de l'électrolyte est composé d'un mélange de 20% en poids de carbonate de propylène (PC), 20% en poids de carbonate d'éthylène (EC) et de 60% en poids de carbonate de diméthyle (DMC), dans lequel est ajouté 5% en poids de carbonate de vinylène (VC).

Lorsque la matière électrochimiquement active cathodique est un oxyde lithié de cobalt ou un oxyde lithié de manganèse, le solvant de l'électrolyte est composé de 40% en poids de carbonate d'éthylène (EC), de 40% en poids de carbonate de diméthyle (DMC) et de 20% en poids de carbonate de diéthyle (DEC).

Le test électrochimique à température ambiante (20°C) est réalisé dans les conditions suivantes, où I_{c} est le courant théorique nécessaire pour décharger de la capacité nominale Cn dudit générateur en une heure :
- charge à 0,05 lc jusqu'à une tension d'arrêt qui dépend de la matière active cathodique,
- puis décharge à 0,05 lc jusqu'à une tension d'arrêt de 3 Volts.

Lorsque la matière électrochimiquement active cathodique est un oxyde lithié de nickel, dopé au cobalt et à l'aluminium, la charge se termine à 4,1V ;

Lorsque la matière électrochimiquement active cathodique est un oxyde lithié de cobalt, la charge se termine à 4,2V ;

Lorsque la matière électrochimiquement active cathodique est un oxyde lithié de manganèse, la charge se termine à 4,3V.

Pour chaque électrode, on mesure la capacité chargée au premier cycle Cc et la capacité déchargée au deuxième cycle Cd en mAh/g de matière active, et on calcule le rendement de cyclage Rt en %.

Le test de cyclage à température élevée est réalisé après deux cycles à température ambiante. Les 25 cycles sont effectués à 60°C de la manière suivante :
- charge à 0,1 lc jusqu'à une tension d'arrêt qui dépend de la matière active cathodique (4,1V, 4,2V ou 4,3V),
- puis décharge à 0,2 lc jusqu'à une tension d'arrêt de 3 Volts.

Pour chaque électrode on mesure la perte de capacité en cyclage F₂₅ sur 25 cycles, exprimée en % de perte en moyenne par cycle, par rapport à la capacité mesurée au premier cycle à 60°C.

### EXEMPLE 1

On réalise, comme décrit précédemment, une électrode selon l'art antérieur à partir d'une pâte comprenant 86% en poids de matière active qui est un oxyde lithié de nickel dopé au cobalt et à l'aluminium de la forme LiNi_{1-x-y}CoₓAl_{y}O₂, 8% en poids d'un matériau conducteur à base de carbone et 6% en poids d'un liant qui est du polyfluorure de vinylidène (PVDF) en solution dans la N-méthylpyrolidone (NMP).

### EXEMPLE 2

On réalise, comme décrit précédemment, une électrode selon l'art antérieur à partir d'une pâte comprenant 86% en poids de matière active qui est un oxyde de cobalt LiCoO₂, 8% en poids d'un matériau conducteur à base de carbone et 6% en poids d'un liant qui est du polyfluorure de vinylidène (PVDF) en solution dans la N-méthylpyrolidone (NMP).

### EXEMPLE 3

On réalise, comme décrit précédemment, une électrode selon l'art antérieur à partir d'une pâte comprenant 90% en poids de matière active qui est un oxyde de manganèse LiMn₂O₄, 4% en poids d'un matériau conducteur à base de carbone et 6% en poids d'un liant qui est du polyfluorure de vinylidène (PVDF) en solution dans la N-méthylpyrolidone (NMP).

### EXEMPLES 4 A 6

On réalise des électrodes selon l'art antérieur respectivement analogues à celles des exemples 1 à 3, à l'exception du fait que le liant est composé de 2% en poids d'un copolymère acrylonitrile / butadiène (NBR) en suspension à 41% en poids dans l'eau et de 2% en poids de carboxyméthylcellulose (CMC) salifiée en solution à 2% dans l'eau.

La matière active utilisée dans les exemples 4, 5, 6 est respectivement la même que celle des exemples 1, 2, 3.

### EXEMPLE 7

On réalise une électrode selon l'invention analogue à celle de l'exemple 4, à l'exception du fait qu'on ajoute dans la pâte du bichromate de potassium K₂Cr₂O₇ à raison de 0,1% en poids.

### EXEMPLE 8

On réalise une électrode selon l'invention analogue à celle de l'exemple 5, à l'exception du fait qu'on ajoute dans la pâte du bichromate de potassium K₂Cr₂O₇ à raison de 0,05% en poids.

### EXEMPLE 9

On réalise une électrode selon l'invention analogue à celle de l'exemple 4, à l'exception du fait qu'on ajoute dans la pâte du métasilicate de sodium Na₂SiO₃ à raison de 0,9% en poids.

### EXEMPLE 10

On réalise une électrode selon l'invention analogue à celle de l'exemple 4, à l'exception du fait qu'on ajoute dans la pâte du métasilicate de sodium Na₂SiO₃ à raison de 0,3% en poids.

### EXEMPLES 11 ET 12

On réalise des électrodes selon l'invention respectivement analogues à celles des exemples 5 et 6, à l'exception du fait qu'on ajoute dans la pâte du métasilicate de sodium Na₂SiO₃ à raison de 0,1% en poids.

### EXEMPLE 13

On réalise une électrode selon l'invention analogue à celle de l'exemple 4, à l'exception du fait qu'on ajoute dans la pâte du monosilicate de sodium SiO₂NaOH à raison de 1% en poids.

### EXEMPLES 14 ET 15

On réalise des électrodes selon l'invention respectivement analogues à celles des exemples 4 et 5, à l'exception du fait que le feuillard d'aluminium a été préalablement protégé par un traitement par des phospho-chromates avant enduction de la pâte.

Le traitement du collecteur une fois décapé est réalisé par immersion dans une solution contenant de l'anhydride chromique, de l'acide phosphorique et de l'acide fluorhydrique. Le film obtenu contient un composé hydraté du phosphore et du chrome.

### EXEMPLES 16 ET 17

On réalise des électrodes selon l'invention respectivement analogue à celles des exemples 4 et 5, à l'exception du fait que le feuillard d'aluminium a été préalablement protégé par un traitement par des chromates avant enduction de la pâte.

Le traitement du collecteur une fois décapé est réalisé par immersion dans une solution contenant de l'anhydride chromique et de l'acide fluorhydrique. Le film obtenu contient un composé hydraté du chrome.

Tous les résultats de l'évaluation électrochimique sont rassemblés dans le tableau 2 ci-dessous.

Le passage d'un procédé utilisant un solvant organique (exemples 1 à 3) à un procédé en milieu aqueux (exemples 4 à 6) provoque la corrosion du collecteur en aluminium, visible par le dégagement gazeux qui se produit lors de l'enduction de la pâte et par l'aspect craquelé de l'électrode après séchage, qui se traduit par une baisse de la capacité chargée au premier cycle pour une même matière active.

En protégeant le collecteur, l'élaboration en milieu aqueux des électrodes ne montre pas de corrosion apparente (absence de dégagement gazeux). Les capacités chargées au premier cycle sont du même ordre de grandeur que celles des électrodes fabriquées avec un procédé non-aqueux. Les collecteurs en aluminium des électrodes selon la présente invention ne sont pas corrodés lors de l'application de la pâte aqueuse.

En outre on observe que la stabilité en cyclage des électrodes selon l'invention est supérieure à celle des électrodes de l'art antérieur. Il ne se produit donc pas de corrosion ultérieure du collecteur.

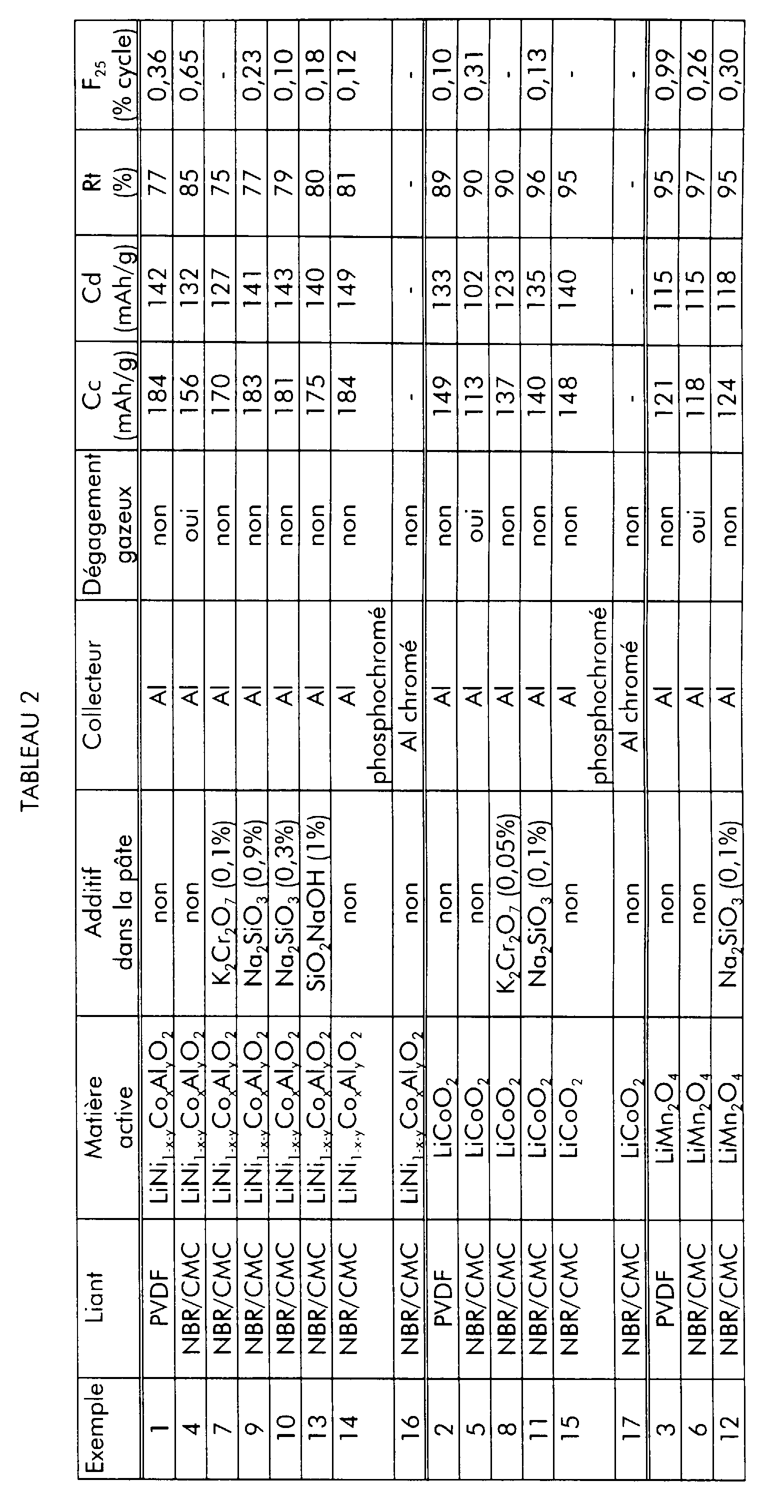

## Revendications

1. Electrode positive de générateur électrochimique rechargeable au lithium comportant un collecteur de courant en aluminium, et une pâte contenant une matière électrochimiquement active et un liant apte à être mis en solution ou suspension dans l'eau, caractérisée en ce que la surface dudit collecteur est recouverte d'une couche protectrice constituée d'au moins un composant choisi parmi un oxalate et un composé d'au moins un élément choisi parmi le silicium, le chrome, et le phosphore.

2. Electrode selon la revendication 1, dans laquelle ledit liant comprend au moins un élastomère.

3. Electrode selon la revendication 2, dans laquelle ledit élastomère est choisi parmi un copolymère styrène / butadiène et un copolymère acrylonitrile / butadiène.

4. Electrode selon l'une des revendications précédentes, dans laquelle ledit liant comprend au moins un composé cellulosique.

5. Electrode selon la revendication 4, dans laquelle ledit composé cellulosique est la carboxyméthylcellulose salifiée de poids moléculaire moyen au moins égal à 200 000.

6. Electrode selon l'une des revendications précédentes, dans laquelle ledit liant contient de 30% à 70% en poids d'un élastomère et de 30% à 70% en poids d'un composé cellulosique par rapport à la somme des poids dudit élastomère et dudit composé cellulosique.

7. Electrode selon la revendication 6, dans laquelle ledit liant contient de 50% à 70% en poids dudit élastomère et de 30% à 50% en poids dudit composé cellulosique par rapport à la somme des poids dudit élastomère et dudit composé cellulosique.

8. Electrode selon la revendication 7, dans laquelle ledit liant contient de 60% à 70% en poids dudit élastomère et de 30% à 40% en poids dudit composé cellulosique par rapport à la somme des poids dudit élastomère et dudit composé cellulosique.

9. Electrode selon l'une des revendications précédentes, dans laquelle ladite matière active est choisie parmi un oxyde de métaux de transition, un sulfure, un sulfate et leurs mélanges.

10. Electrode selon la revendication 9, dans laquelle ledit oxyde de métaux de transition est choisi parmi un oxyde de vanadium, un oxyde lithié et un oxyde lithié dopé d'un métal de transition.

11. Générateur électrochimique rechargeable au lithium comprenant un électrolyte, au moins une électrode négative et au moins une électrode positive selon l'une des revendications 1 à 10, dans lequel ladite électrode négative a pour matière active un matériau carboné apte à insérer du lithium dans sa structure.

12. Générateur électrochimique rechargeable au lithium comprenant un électrolyte, au moins une électrode négative et au moins une électrode positive selon l'une des revendications 1 à 10, dans lequel ledit électrolyte est liquide et comprend au moins un sel de lithium dissout dans au moins un solvant organique.

13. Générateur électrochimique rechargeable au lithium comprenant un électrolyte, au moins une électrode négative et au moins une électrode positive selon l'une des revendications 1 à 10, dans lequel ledit électrolyte comprend au moins une matrice polymère et un sel de lithium.

14. Générateur selon la revendication 13, dans lequel ledit électrolyte comprend en outre au moins un solvant organique qui est liquide à la température de fonctionnement dudit générateur.

15. Procédé de fabrication d'une électrode positive de générateur électrochimique rechargeable au lithium comportant un collecteur de courant en aluminium, et une pâte contenant une matière électrochimiquement active et un liant, caractérisée en ce que ledit procédé comprend les étapes suivantes :
- on réalise une pâte en ajoutant une matière électrochimiquement active en poudre à un liant en solution ou en suspension dans l'eau,
- on étale ladite pâte sur un collecteur de courant en aluminium recouvert d'une couche protectrice constituée d'au moins un composant choisi parmi un oxalate et un composé d'au moins un élément choisi parmi le silicium, le chrome, et le phosphore, pour former une électrode,
- on sèche ladite électrode à une température comprise entre 40°C et 120°C pour évaporer l'eau,
- on comprime ladite électrode.

16. Procédé de fabrication d'une électrode positive de générateur électrochimique rechargeable au lithium comportant un collecteur de courant en aluminium, et une pâte contenant une matière électrochimiquement active et un liant, caractérisée en ce que ledit procédé comprend les étapes suivantes :
- on réalise une pâte en ajoutant à un liant en solution ou en suspension dans l'eau, une matière électrochimiquement active en poudre et au moins un composant choisi parmi un oxalate, un silicate, un chromate, un phosphate, et un phosphochromate.
- on étale ladite pâte sur un collecteur de courant en aluminium pour former une électrode,
- on sèche ladite électrode à une température comprise entre 40°C et 120°C pour évaporer l'eau,
- on comprime ladite électrode.

17. Procédé selon la revendication 16, dans lequel ledit composant est choisi parmi le monosilicate de sodium, le métasilicate de sodium, le chromate de potassium, et le bichromate de potassium.

18. Procédé selon l'une des revendications 16 et 17, dans lequel ledit composant est le métasilicate de sodium.

19. Procédé selon l'une des revendications 15 à 18, dans laquelle ledit liant comprend au moins un élastomère.

20. Procédé selon l'une des revendications 15 à 19, dans laquelle ledit liant comprend au moins un composé cellulosique.

21. Procédé selon l'une des revendications 15 à 20, dans laquelle ledit liant contient de 30% à 70% en poids d'un élastomère et de 30% à 70% en poids d'un composé cellulosique par rapport à la somme des poids dudit élastomère et dudit composé cellulosique.

22. Procédé selon l'une des revendications 15 à 21, dans laquelle ledit liant contient de 50% à 70% en poids dudit élastomère et de 30% à 50% en poids dudit composé cellulosique par rapport à la somme des poids dudit élastomère et dudit composé cellulosique.

23. Procédé selon l'une des revendications 15 à 22, dans laquelle ledit liant contient de 60% à 70% en poids dudit élastomère et de 30% à 40% en poids dudit composé cellulosique par rapport à la somme des poids dudit élastomère et dudit composé cellulosique.

24. Procédé selon l'une des revendications 15 à 23, dans laquelle ledit élastomère est choisi parmi un copolymère styrène / butadiène et un copolymère acrylonitrile / butadiène.

25. Procédé selon l'une des revendications 15 à 24, dans laquelle ledit composé cellulosique est la carboxyméthylcellulose salifiée de poids moléculaire moyen au moins égal à 200 000.

26. Procédé selon l'une des revendications 15 à 25, dans laquelle ladite matière active est choisie parmi un oxyde de métaux de transition, un sulfure, un sulfate et leurs mélanges.

27. Procédé selon la revendication 26, dans laquelle ledit oxyde de métaux de transition est choisi parmi un oxyde de vanadium, un oxyde lithié et un oxyde lithié dopé d'un métal de transition.
